# EUROPÄISCHE PATENTSCHRIFT

(11) **EP 2 246 173 B1**
(45) Veröffentlichungstag und Bekanntmachung des Hinweises auf die Patenterteilung: **20.06.2012**
(21) Anmeldenummer: 10004397.5
(22) Anmeldetag: 26.04.2010
(51) Int. Cl.: B29C 47/02, B42D 15/10, G06K 19/077, B32B 37/15

(54) **Einbettung elektronischer Bauteile durch Extrusionsbeschichtung**
Embedding of electronic components using extrusion coating
Intégration de composants électroniques à l'aide d'un revêtement d'extrusion

(30) Priorität: 29.04.2009 DE 102009019378
(43) Veröffentlichungstag der Anmeldung: 03.11.2010
(73) Patentinhaber: Giesecke & Devrient GmbH, 81677 München (DE)
(72) Erfinder: Riedl, Josef, 85395 Attenkirchen (DE); Braun, Andreas, 80798 München (DE)

(56) Entgegenhaltungen:
- EP-A1- 0 778 159
- EP-A1- 1 502 764
- WO-A1-01/85451

## Beschreibung

Gegenstand der vorliegenden Erfindung ist ein Verfahren zur Herstellung eines Verbundmaterials mit mindestens einer ersten Schicht aus einem ersten Material, mindestens einem Bauteil oder einer Bauteilgruppe auf der ersten Schicht, und einer zweiten Schicht aus mindestens einem weiteren Material, die die erste Schicht und das mindestens eine Bauteil oder die Bauteilgruppe bedeckt. Gegenstand der vorliegenden Erfindung ist auch ein mittels des erfindungsgemäßen Verfahrens erhältliches Verbundmaterial mit mindestens einem eingebetteten Bauteil oder einer Bauteilgruppe. Die eingebetteten Bauteile sind insbesondere elektronische Bauteile, wie IC-Module mit IC-Chip und Antenne. Gegenstand der vorliegenden Erfindung sind auch mit dem erfindungsgemäßen Verbundmaterial hergestellte Produkte.

Die kontaktlose Datenübermittlung gewinnt zunehmend an Bedeutung, beispielsweise für Warenprüfungszwecke und Warenkontrollzwecke, zur Kennzeichnung von Waren unterschiedlichster Art zur Verhinderung von Fälschung oder Diebstahl, und insbesondere auch für elektronische Ausweise. Als Datenträger wirkt dabei typischerweise ein Modul aus IC-Chip und Antenne in Form eines integrierten Dünnschicht-Schaltkreises. Der Chip besteht aus einer Mehrzahl von elektronischen Bauteilen wie Transistoren, Kondensatoren, Widerständen, Dioden, etc. und die Antenne ist eine leitfähige Schicht, typischerweise in Spulenform. Die gespeicherte Information kann ausgelesen werden und beispielsweise auf einem Display angezeigt werden oder bestimmte mechanische Reaktionen hervorrufen, beispielsweise den Zugang zu einem bestimmten Gebäudebereich freigeben oder sperren. Es ist wünschenswert, die Datenträger möglichst klein und insbesondere flach zu halten, um sie in Form von Etiketten auf der Oberfläche von Gegenständen anbringen zu können oder als Inletts in den Schichtaufbau einer Karte oder eines sonstigen flachen Gegenstands integrieren zu können.

Aufgrund ihrer geringen Abmessungen (ein IC-Chip hat in der Regel eine Fläche von wenigen Quadratmillimetern und eine Dicke von unter 0,3 µm) sind die Datenträger empfindlich und schwierig zu handhaben. Sie werden deshalb in Folien eingeschlossen, und die entstehenden Flachmaterialien sind relativ leicht ohne Beschädigungen des Datenträgers zu lagern, zu transportieren und weiterzuverarbeiten. Für das Einhausen der IC-Chips sind verschiedene Verfahren bekannt.

Allgemein wird eine Trägerfolie vorgesehen, typischerweise mit aufgedruckter Antenne, und darauf werden die elektronischen Bauteile angebracht. Zur Aufnahme der Bauteile können in der Trägerfolie Ausstanzungen vorgesehen werden. Da keine Passergenauigkeit zwischen elektronischem Bauteil und Ausstanzung erzielt werden kann, ist eine Fülltechnik notwendig, wobei jedoch keine zufriedenstellend planaren Oberflächen erzielt werden können. Häufig sind keine Ausstanzungen möglich oder die elektronischen Bauteile stehen trotz Ausstanzung über die Trägerfolie über. Dann werden elastische Folien zur Abdeckung der elektronischen Bauteile auf die Trägerfolie auflaminiert. Auch auf diese Weise können jedoch keine egalisierten ebenen Oberflächen erhalten werden. Die Folienoberfläche ist vielmehr uneben, bedingt durch die unterschiedlichen Abmessungen der abgedeckten elektronischen Bauteile. Das Laminieren oder Kaschieren von Trägerfolien mit elektronischen Bauteilen mit anderen Folien ist auch nicht mit beliebigen Folien möglich, sondern im Wesentlichen nur mit Folien aus thermoplastischen Polyurethanen und Folien aus thermoplastischen Elastomeren.

Nachteilig an dem Verfahren, elektronische Bauteile durch auflaminierte oder aufkaschierte Folien abzudecken, ist auch die dabei auftretende lang andauernde Temperatur- und Druckbelastung der elektronischen Bauteile sowie der erforderliche hohe Druck. Die erhaltenen Laminate sind auch vergleichsweise dick.

Aus JP 2006-007153 ist ein Verfahren zum Einhausen von IC-Modulen bekannt, bei dem auf zwei Trägermaterialbahnen jeweils ein Heißschmelzklebstoff aufgetragen wird, auf eine der mit Klebstoff beschichteten Bahnen IC-Module aufgesetzt werden, und die beiden Bahnen dann so zusammengeführt werden, dass die Klebstoffschichten zueinander weisen. Die beiden Bahnen werden dann im Walzenspalt zwischen zwei Heißpresswalzen zusammengepresst, wodurch ein Laminat erhalten wird, in dem sich die IC-Module zwischen den beiden Klebstoffschichten befinden. Zur Kontrolle der Dicke des Laminats sind nach den Heißpresswalzen zwei Dickenkontrollwalzen vorgesehen. Durch die Kontrolle der Auftragungsgeschwindigkeit der Klebstoffschichten wird eine homogene Auftragung erzielt, was zu Laminaten mit geringen Dickenschwankungen führen soll. Beim Laminieren sind die elektronischen Bauteile jedoch einer hohen Druckbelastung ausgesetzt, und die Temperatur- und Druckbelastung ist bei Laminierungsvorgängen über eine längere Zeitspanne erforderlich.

Aus US 2006/0011288 A1 ist ein Verfahren zum Einhausen von IC-Chips bekannt, bei dem die IC-Chips auf einem ersten Substratmaterial angeordnet und einem Schmelzbeschichter zugeführt werden, der ein geschmolzenes zweites Substratmaterial wie ein thermoplastisches Harz aufträgt. Das Sandwichmaterial mit den IC-Chips zwischen Trägersubstrat und zweitem Substratmaterial wird zu einer Kühlwalze weitertransportiert, an der das zweite Substratmaterial zu einer festen Folie härtet, an der die IC-Chips haften. Anschließend wird das Trägersubstrat abgezogen und die mit den IC-Chips bestückte Folie einer Laminierstation zugeführt. Dort wird unter erhöhtem Druck und/oder erhöhter Temperatur eine weitere Folie auflaminiert, wobei ein Bandmaterial entsteht, in dem die IC-Chips zwischen zwei Folien eingeschlossen sind. Die Folien folgen den Oberflächenkonturen der eingehausten Chips. Auch bei diesem Verfahren sind hohe Temperatur- und Druckbelastungen unvermeidbar, und die erhaltenen Verbundfolien besitzen keine ebenen Oberflächen.

Aus der US 6248199 B1 ist ein Verfahren zum kontinuierlichen Herstellen von mit elektronischen Bauelementen bestückten Karten bekannt, in dem die elektronischen Bauelemente zwischen zwei in Extrusionstechnik zusammengeführte Schmelzeströme eingebettet werden. Die Bauelemente werden dabei auf einem Träger bereitgestellt und mit diesem zwischen die Extrusionsschichten gebracht. Der Träger ist ein Netz, flächenmäßig kleiner als die fertige Karte und/ oder weist Ausnehmungen auf, durch die hindurch sich die beiden Extrusionsschmelzeströme verbinden. Alternativ zur Verwendung eines Trägers werden die Bauelemente einzeln zwischen die Schmelzeströme gebracht. Die bekannte Lösung gestattet eine leichte Einstellbarkeit der Kartendicke und liefert eine gute Oberflächenqualität. Die einzusetzende Anlage ist jedoch aufwendig und eignet sich vor allem zur Herstellung fertiger Kartenkörper. Ein nachträgliches Aufbringen weiterer Schichten ist nicht vorgesehen und wäre auch im Hinblick auf die Verbindung mit dem Extrusionskörper schwierig.

Die WO 01/85451 A1 beschreibt eine haltbare Sicherheitskarte, beispielsweise einen Personalausweis, sowie ein Verfahren zum Herstellen einer solchen Karte. Das Problem der Bruchanfälligkeit herkömmlicher Sicherheitskarten wird durch ein neues Material aus amorphem Copolyester und einem thermoplastischen Polyesterelastomer in einer bestimmten Zusammensetzung gelöst. Gemäß einer Ausführungsform besteht eine Trägerschicht einer Sicherheitskarte aus diesem neuen Material, um der Karte die notwendige Festigkeit zu verleihen. Auf der Trägerschicht kann eine Verbindungsschicht aufgebracht sein, die bewirkt, dass eine Abdeckschicht eine feste Verbindung mit der Trägerschicht eingeht, so dass ein Sicherheitselement, beispielsweise ein Bild, zwischen der Trägerschicht und der Abdeckschicht eingeschlossen werden kann. Die Verbindung zwischen der Abdeckschicht und der Trägerschicht bzw. der Verbindungsschicht erfolgt durch Laminierung. Ein Extrusionsverfahren wird nicht offenbart.

Die EP 0 778 159 A1 beschreibt ein Verfahren zur Herstellung einer Sicherheitsabdeckungsstruktur beispielsweise für Personalausweise. Die Struktur kann aus einer ersten Lage aus Polyester und wenigstens einer zweiten Lage aus Polyolefin bestehen, wobei zwischen der ersten und der zweiten Lage wenigstens ein Reflektionselement angeordnet ist. Die Struktur wird hergestellt, indem geschmolzenes Polyolefin auf die erste Lage aufgebracht wird, auf der in einem früheren Verfahrensschritt bereits das mindestens eine Reflektionselement angeordnet worden ist. Anschließend wird die Struktur aus erster Lage, Reflektionselement und zweiter Lage zwei beheizten Druckrollen zugeführt.

Aufgabe der vorliegenden Erfindung ist es, elektronische oder andere Bauteile auf eine Art und Weise zu schützen, die die Nachteile des Stands der Technik vermeidet.

Aufgabe der vorliegenden Erfindung ist es insbesondere, elektronische Module oder andere Bauteile in Form von Flachmaterialien bereitzustellen, die einfach gelagert, transportiert, gehandhabt und weiter verarbeitet werden können, ohne die Integrität der Bauteile zu gefährden.

Aufgabe der vorliegenden Erfindung ist es auch, ein einfaches Herstellungsverfahren für die Flachmaterialien mit geschützten Bauteilen bereitzustellen, wobei die Belastungen der Bauteile durch hohe Temperaturen und Drücke möglichst gering gehalten werden sollen.

Aufgabe der vorliegenden Erfindung ist es ferner, Flachmaterialien mit geschützten elektronischen oder anderen Bauteilen bereitzustellen, die eine geringe Dicke und keine Dickenschwankungen aufweisen, d.h. trotz unterschiedlicher Abmessungen der Bauteile eine im wesentlichen ebene Oberfläche aufweisen.

Aufgabe der vorliegenden Erfindung ist es darüber hinaus, Datenträgerelemente mit den erfindungsgemäß geschützten elektronischen Bauteilen sowie mit den Datenträgerelementen ausgestattete Produkte bereitzustellen.

Die Aufgabe wird gelöst durch das Verfahren zur Herstellung eines Verbundmaterials mit den Merkmalen, wie sie im unabhängigen Anspruch 1 angegeben sind, durch das Verbundmaterial mit den Merkmalen, wie sie im unabhängigen Anspruch 8 angegeben sind, und durch das Produkt mit den Merkmalen, wie sie im unabhängigen Anspruch 17 angegeben sind. Ausgestaltungen des erfindungsgemäßen Gegenstands sind in den jeweiligen abhängigen Ansprüchen angegeben.

In einer bevorzugten Ausführung ermöglicht die Erfindung die Herstellung eines Verbundmaterials mit einer sehr guten Oberflächenqualität, in dem zu schützende Bauteile formschlüssig eingebettet sind und auf das in einem nachfolgenden Verarbeitungsschritt eine weitere Schicht aufgebracht, insbesondere auflaminiert werden kann. Hierzu wird eine Trägerfolie, die auf einer Seite gute Verbindungseigenschaften zu einem Schmelzematerial aufweist und die und auf der anderen Seite gut laminierbar ist, auf der Verbindungsseite mit Bauteilen bestückt und eine Extrusionsbeschichtung durchgeführt. Bei der Extrusionsbeschichtung umschließt das geschmolzene extrudierte Material die Bauteile passgenau, bettet sie ein und bildet eine ebene, d.h. von der jeweiligen Form und den jeweiligen Abmessungen der Bauteile unbeeinflusste, Folienoberfläche. Zugleich geht das Schmelzematerial ein gute Verbindung zu der Trägerfolie ein. Das erhaltene Folienverbundmaterial besitzt eine gleichbleibende Dicke. Zumindest eine seiner Oberflächen wird ferner von einer Schicht gebildet, die gut laminierbar ist.

Die Erfindung wird nachfolgend anhand elektronischer Bauteile beschrieben. Sie ist jedoch grundsätzlich nicht auf die Einbettung elektronischer Bauteile beschränkt, sondern generell in allen Fällen anwendbar, in denen es vorteilhaft erscheint, Elemente unterschiedlicher Abmessung durch Einbettung in den Schichtverbund einer Verbundfolie zu schützen, und in denen ebene Oberflächen erwünscht sind.

Das erfindungsgemäße Extrusionsbeschichtungsverfahren zur Einbettung elektronischer Bauteile wird bevorzugt in einer Extruder-Walzenanlage durchgeführt. Die mit den Bauteilen bestückte Trägerfolie als Ausgangsmaterial wird einem mit einer geeigneten Düse, wie einer Breitschlitzdüse, ausgestatteten Extruder zugeführt. Dabei wird das Ausgangsmaterial über Walzen transportiert. Im Walzenspalt zwischen zwei Walzen, deren Temperatures bevorzugt geregelt werden, wird die extrudierte Schmelze auf die mit den elektronischen Bauteilen bestückte Trägerfolie aufgebracht. Die extrusionsbeschichtete Folie wird weitertransportiert, und beim weiteren Durchlauf durch die Walzenanlage wird die Schmelzbeschichtung geglättet, gekühlt, gehärtet und mit der Trägerfolie verbunden. In dem gebildeten Folienverbundmaterial sind die elektronischen Bauteile von dem schmelzextrudierten Material dicht umschlossen und dadurch optimal geschützt und passgenau eingebettet.

Die Trägerfolie kann, wie beim Stand der Technik üblich, Ausstanzungen zur Aufnahme der elektronischen Bauteile aufweisen. Derartige Ausstanzungen müssen wie üblich abgedeckt werden, beispielsweise durch eine weitere, auf die Trägerfolie auflaminierte Folie. Im Gegensatz zum Stand der Technik müssen derartigen Aussparungen, falls vorhanden, nicht separat gefüllt werden. Bei der Beschichtung durch Schmelzextrusion fließt das geschmolzene Polymer auch in Lücken zwischen Trägerfolie und Bauteilen und egalisiert alle Unebenheiten.

Bei dem Extrusionsbeschichtungsverfahren kann die Druckbelastung, und durch Wahl eines geeigneten Beschichtungsmaterials auch die Temperaturbelastung, gering gehalten werden. Sowohl Temperatur- als auch Druckbelastung treten nur über einen kurzen Zeitraum auf. Die erhaltene Verbundfolie kann in einer geringen Dicke hergestellt werden. Bevorzugt beträgt die Dicke 300 µm oder weniger. Die Schmelze dringt in alle Lücken ein und gleicht Unebenheiten aus, so dass die elektronischen Bauteile dicht umschlossen werden, etwaige Ausstanzungen in der Trägerfolie gefüllt werden und ein gleichmäßiges Flachmaterial ohne Dickenschwankungen erhalten wird.

Als Trägerfolie, auf der die elektronischen Bauteile angebracht und der Extrusionsbeschichtung zugeführt werden, können grundsätzlich dieselben Materialien verwendet werden, die auch beim Stand der Technik Anwendung finden. Die Folien sollten temperaturstabil und formstabil sein, d.h. den beim Extrusionsbeschichtungsverfahren auftretenden Beanspruchungen standhalten. Jedenfalls muss der Schmelzpunkt der Trägerfolie über dem Schmelzpunkt des Beschichtungsmaterials liegen. Bevorzugt sind Folien, die aus einem temperaturbeständigen Thermoplasten hergestellt sind und/oder biaxial verstreckt sind. Als gut geeignete Beispiele seien genannt Polyester, Polycarbonate, Polypropylen, Cycloolefine, Polyamide, Polyethylennaphthalate, Polyetheretherketone, Polysulfonpolymere, Fluorpolymere, Polyimide, Polyamidimide, usw., prinzipiell alle Hochleistungskunststoffe und technischen Thermoplaste. Gut geeignete verstreckte Folien sind beispielsweise bo (biaxially oriented) PP, bo-PET, bo-PBT. Vorteilhaft ist auch, wenn die Folien mit Füllstoffen wie z.B. Titandioxid gefüllt werden können.

Als Beschichtungsmaterial, also als Material für die Schicht, in die die elektronischen Bauteile eingebettet werden, können prinzipiell alle schmelzextrudierbaren Materialien verwendet werden, wobei auch schwer verarbeitbare Materialien im Extruder plastifiziert und aufgeschmolzen werden können. Geeignet sind also prinzipiell alle Thermoplaste, beispielsweise Polyolefine, Vinylpolymere, Polyamide, Polyester, Polyacetale, Polycarbonate, TPE's etc., wobei jedoch das Extrusionsmaterial und das Material der Trägerfolie aufeinander abgestimmt werden müssen. Wie bereits erwähnt, darf die Trägerfolie bei den erforderlichen Extrusionstemperaturen nicht erweichen, und die Materialien müssen eine gute Verbindung miteinander eingehen. Eine derartige Abstimmung der Materialien aufeinander kann ein Fachmann routinemäßig vornehmen. Erforderlichenfalls kann eine haftungsverbessernde Vorbehandlung der Trägerfolie vorgenommen werden, z.B. eine Coronabehandlung. Um die Temperaturbelastung der elektronischen Bauteile gering zu halten, und auch um bei der Wahl des Materials der Trägerfolie nicht eingeschränkt zu werden, wird vorzugsweise ein Beschichtungsmaterial mit niedriger Verarbeitungstemperatur, d.h. niedriger Schmelztemperatur, verwendet. Besonders bevorzugt sind Polymerschmelzen, die flexibel und mechanisch stabil sind.

Ist bei der Herstellung des Folienverbundmaterials bereits bekannt, mit welchen Materialien das Folienverbundmaterial später kombiniert werden soll, beispielsweise bei der Integration in einen Kartenaufbau, werden diese Materialien bei der Auswahl der Materialien für das Folienverbundmaterial bevorzugt berücksichtigt. Das Folienverbundmaterial sollte eine gute Verträglichkeit mit den Materialien besitzen, mit denen es später verbunden werden soll, beispielsweise durch Laminieren.

Die Extrusionsbeschichtung kann mit nur einem einzigen Material durchgeführt werden, wie einem einzigen thermoplastischen Polymer. Alternativ können Polymergemische verwendet werden. Als weitere Alternative ist auch eine Coextrusion verschiedener thermoplastischer Polymere möglich. Bei der Coextrusion werden mehrere verschiedene Materialien geschmolzen und extrudiert und in Schichten übereinander verfestigt. Auf diese Art kann eine Beschichtung aus mehreren nicht verwandten Materialien hergestellt werden. Die Beschichtung durch Coextrusion von zwei oder mehr als zwei verschiedenen thermoplastischen Polymeren hat den Vorteil, dass die die elektronischen Bauteile einbettende Beschichtung optimal auf die Materialien abgestimmt werden kann, mit denen sie eine gute Verbindung eingehen soll, d.h. die Trägerfolie der elektronischen Bauteile einerseits und die später mit der Beschichtung zu verbindenden Schichten beziehungsweise Folien andererseits. Bei der Coextrusion entsteht also eine Einbettungsschicht aus mehreren Teilschichten, wobei zumindest die äußerste Teilschicht, d.h. die von der Trägerfolie am weitesten abgewandte Teilschicht, eine im Wesentlichen ebene Oberfläche aufweist.

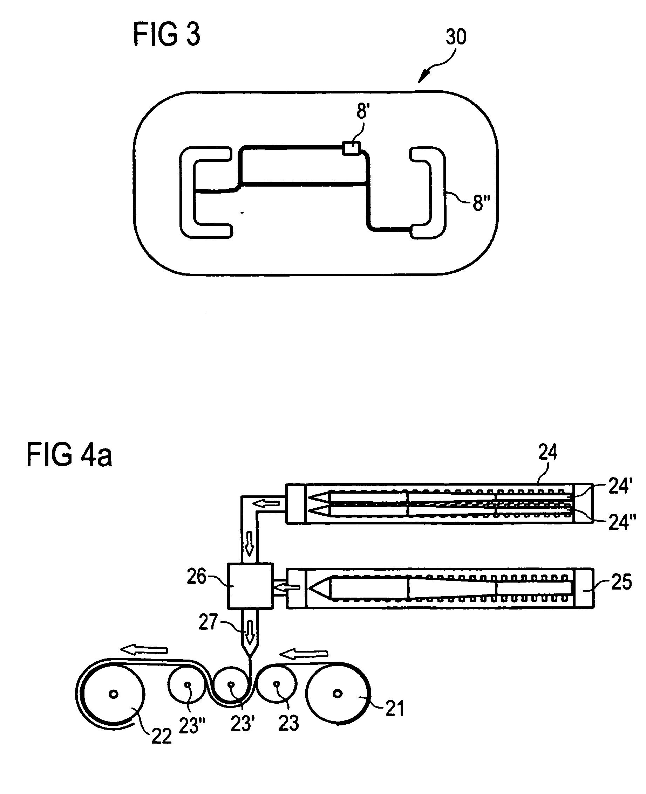

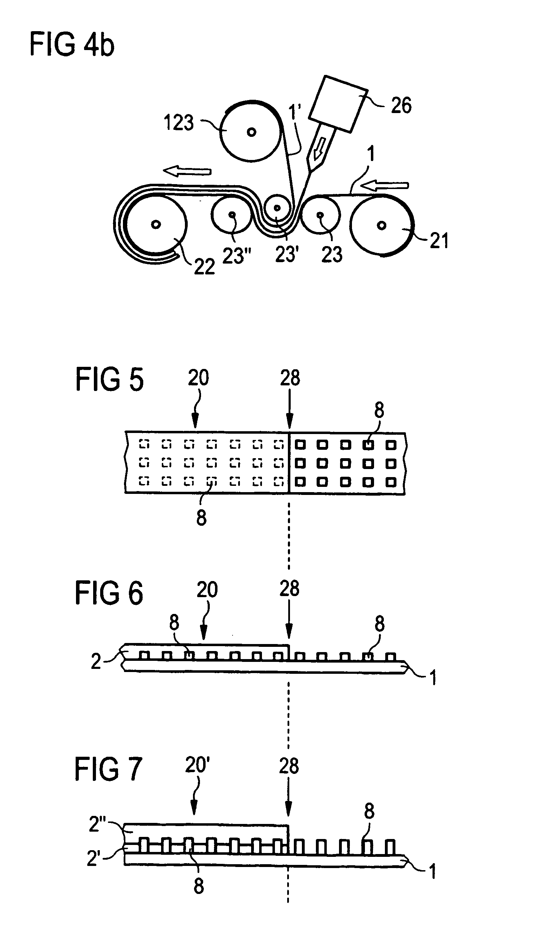

Als Extruder sind grundsätzlich alle gängigen Extruder geeignet, beispielsweise Schneckenextruder wie Einschneckenextruder oder Doppelschneckenextruder oder Kombinationen aus beiden Typen. Typischerweise können ein bis fünf Extruder kombiniert werden. Das erfindungsgemäße Verfahren mit beispielhaften Extrusionsbedingungen, Auftragungs/Härtungsbedingungen der extrudierten Polymerschmelze wird später im Zusammenhang mit Fig. 4 noch näher erläutert.

Gewünschtenfalls kann das Extrusionsbeschichtungsverfahren auch wiederholt werden, d.h. das bei der ersten Extrusionsbeschichtung erhaltene Folienverbundmaterial kann mit elektronischen Bauteilen bestückt werden und erneut einem Extrusionsbeschichtungsverfahren unterzogen werden. Das bei der erneuten Extrusionsbeschichtung verwendete Beschichtungsmaterial muss nun natürlich wiederum eine niedrigere Verarbeitungstemperatur besitzen als die Erweichungstemperatur des zuerst aufgetragenen Beschichtungsmaterials.

Das Folienverbundmaterial mit den eingebetteten elektronischen Bauteilen kann an einer oder an beiden Oberflächen mit weiteren Beschichtungen ausgestattet werden oder es können weitere Folien auflaminiert oder aufkaschiert werden. Derartige Beschichtungen können als Schutzschichten dienen, die Feuchtigkeitsbeständigkeit verbessern, beispielsweise Beschichtungen mit SiO₂, oder statisch aufladbar sein, beispielsweise Beschichtungen aus ITO (indium tin oxide). Auflaminierte oder aufkaschierte Folien können ebenfalls als Schutzfolien dienen oder ihrerseits mit elektronischen Bauteilen oder anderen Elementen bestückt sein. Alle Materialien können nach Wunsch lichtdurchlässig oder opak gewählt werden und gegebenenfalls gefärbt werden.

Das erfindungsgemäße Folienverbundmaterial wird in aller Regel nicht in Form von Einzelelementen sondern in Form eines Endlosmaterials hergestellt. Das Endlosmaterial wird dann in die gewünschten Einzelelemente, d.h. Datenträgerelemente, mit jeweils nur einem elektronischen Bauteil oder einer elektronischen Bauteilgruppe beziehungsweise mehreren elektronischen Bauteilen getrennt, beispielsweise durch Schneiden, Laserschneiden oder Stanzen. Werden die Abstände zwischen den elektronischen Bauteilen beziehungsweise den Bauteilgruppen auf der Trägerfolie groß gewählt, können Einzelelemente mit entsprechend großen Abmessungen zugeschnitten werden. Dies kann beispielsweise vorteilhaft sein, wenn die Einzelelemente als Inletts in einem Kartenaufbau verwendet werden sollen. Wenn ein Inlett dieselben Abmessungen wie die Karte selbst hat, erstreckt es sich über die gesamte Fläche der Karte und es treten auch im Kartenaufbau keine Dickenschwankungen auf. Alternativ zur Integration in das Volumen eines Produkts können die erfindungsgemäßen Datenträgerelemente mit eingebetteten Bauteilen auch an der Oberfläche von Produkten angebracht werden, beispielsweise in Form von Etiketten aufgeklebt werden.

Die vorliegende Erfindung wird nachfolgend anhand von Figuren noch weiter veranschaulicht. Es wird darauf hingewiesen, dass die Figuren nicht maßstabs- und nicht proportionsgetreu sind. Außerdem wird darauf hingewiesen, dass die Figuren die Erfindung lediglich näher erläutern sollen und in keiner Weise beschränkend zu verstehen sind. Gleiche Bezugsziffern bezeichnen gleiche Elemente.

Es zeigen:
- Fig. 1: einen Schnitt durch ein Laminat mit elektronischen Bauteilen gemäß Stand der Technik,
- Fig. 2a: einen Schnitt durch ein Folienverbundmaterial mit eingebette- ten elektronischen Bauteilen gemäß der vorliegenden Erfin- dung,

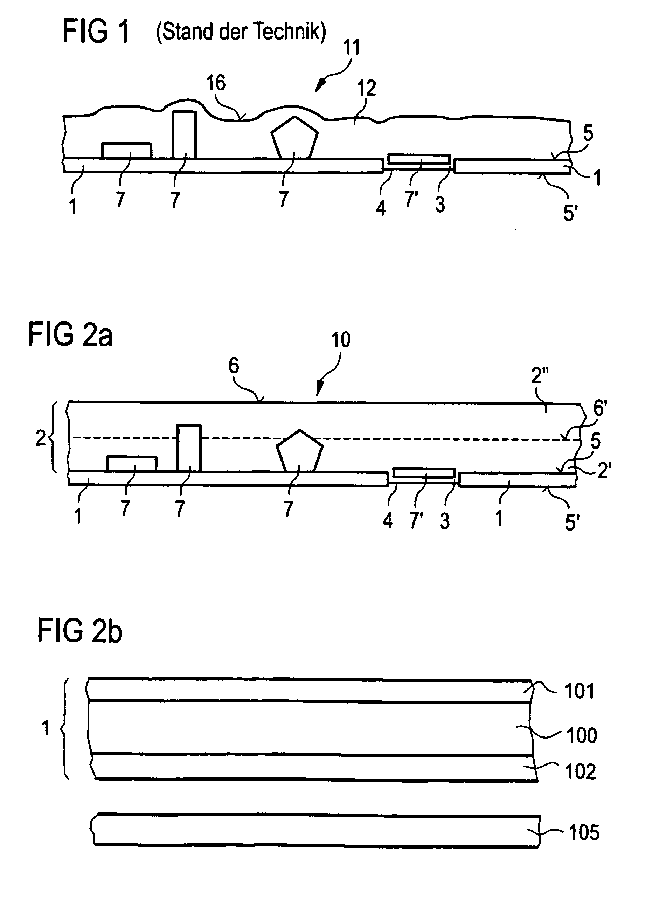

- Fig. 2 b: einen Schnitt durch eine Trägerschicht,
- Fig. 3: eine Aufsicht auf ein erfindungsgemäßes Datenträgerelement aus Folienverbundmaterial mit elektronischen Bauteilen,
- Figuren 4 bis 7: eine schematische Darstellung des erfindungsgemäßen Extru- sionsbeschichtungsprozesses, wobei
- Fig. 4a: einen Schnitt durch die Extruder-Walzenanlage,
- Fig. 4b: einen Schnitt durch eine Variante einer Extruder- Walzenanlage,
- Fig. 5: eine Aufsicht auf ein erfindungsgemäßes Folienverbundmate- rial, während der Extrusionsbeschichtung,
- Fig. 6: einen Schnitt durch ein erfindungsgemäßes Folienverbundma- terial, während der Extrusionsbeschichtung, und
- Fig. 7: einen Schnitt wie in Fig. 6, jedoch mit Coextrusionsbeschich- tung, zeigt

Fig. 1 zeigt ein Laminat 11 mit elektronischen Bauteilen 7, 7' gemäß Stand der Technik in Schnittdarstellung. Das Laminat 11 besteht aus einer ersten Schicht 1 mit Oberflächen 5, 5' als Trägerfolie, auf der elektronische Bauteile 7 angebracht sind. Die Trägerschicht 1 weist eine Aussparung 3 auf, die durch eine Folie 4 abgedeckt ist. In der Aussparung 3 befindet sich ein weiteres elektronisches Bauteil 7'. Zum Schutz der elektronischen Bauteile ist auf die Trägerfolie 1 auf der Oberfläche 5, auf der sich die elektronischen Bauteile befinden, eine Folie 12 auflaminiert. Wie aus Fig. 1 ersichtlich ist, ist die Oberfläche 16 der auflaminierten Folie 12 nicht eben, sondern weist aufgrund der Unebenheiten des Untergrunds ebenfalls Unebenheiten auf. Das Bauelement 7' füllt die Aussparung 3 nicht vollständig aus, und die verbleibenden Toleranzen können durch die Folie 12 nicht ausgeglichen werden. Die Lücken müssen vor dem Auflaminieren der Folie 12 daher separat gefüllt werden.

Fig. 2a zeigt einen Schnitt durch ein erfindungsgemäßes Folienverbundmaterial 10. Das Folienverbundmaterial 10 weist eine erste Schicht 1 und eine zweite Schicht 2 auf. Die Schichten wurden durch Zuführen der ersten Schicht 1 in einen Coextrusionsprozeß, in dem die zweite Schicht 2 aufgebracht wird, verbunden.

Die erste Schicht 1 ist eine Trägerfolie und besitzt eine Innenoberfläche 5 und eine Außenoberfläche 5'. Auf der Innenoberfläche 5 sind elektronische Bauteile 7 angeordnet. Ein weiteres elektronisches Bauteil 7' befindet sich in einer ausgestanzten Aussparung 3 der im folgenden Trägerschicht genannten Schicht 1, wobei die Aussparung 3 durch eine auf die Außenoberfläche 5' auflaminierte Abdeckung 4 verschlossen ist. Die Trägerschicht 1 besitzt, wie in Fig. 2b veranschaulicht, ihrerseits eine innere Schichtstruktur mit einer Kernschicht 100 und einer Verbindungsschicht 101 sowie in manchen Ausführungen mit einer Laminierungsschicht 102.

Die Kernschicht 100 verleiht der ersten Schicht 1 Zugfestigkeit und sichert die Formstabilität. Sie ist so beschaffen, daß sie während des Extrusionsbeschichtungsprozesses nicht aufschmilzt oder erweicht.

Die Verbindungsschicht 101 bildet in Bezug auf eine nachfolgend aufgebrachte zweite Schicht 2 eine Innenoberfläche 5. Sie stellt sicher, daß die Trägerschicht 1 unter Extrusionsbedingungen eine gute Verbindung zu einer darauf aufgebrachten Extrusionsbeschichtung eingeht. Der Schmelzpunkt der Verbindungsschicht 101 liegt typischerweise etwas niedriger als der Schmelzpunkt der Kernschicht 100. Während des Extrusionsbeschichtungsprozesses erweicht so die Verbindungsschicht 101, um einen Verbund zwischen Trägerschicht 1 und zweiter Schicht 2 zu erzielen, während die Kernschicht 101 fest bleibt.

Die Laminierungsschicht 102 bildet in Bezug auf eine nachfolgend aufgebrachte zweite Schicht 2 eine Außenoberfläche 5'. Sie gewährleistet, daß auf die Trägerschicht 1 zu einem späteren Zeitpunkt durch Laminieren noch eine Deckschicht 105 aufgebracht werden kann.

Die Strukturschichten der ersten Schicht 1 unterscheiden sich durch an die jeweilige Funktion angepaßte Materialzusammensetzungen. So kann die Kernschicht 100 aus einem teilkristallinen Material bestehen, dessen Erweichungs- bzw. Schmelzpunkt infolge der kristallinen Strukturen im Kunststoff höher ist als jener der äußeren Schichten 101 und 102. Diese bestehen zweckmäßig vornehmlich aus einem amorphen Polymer und enthalten keine kristallinen Anteile. Zweckmäßig besteht die Laminierungsschicht 102 aus demselben Material wie die Verbindungsschicht 101. Durch eine Verstreckung der gesamten Trägerschicht 1, vorzugsweise in einem biaxialen Verstreckungsprozeß, kann der Schmelzpunktunterschied zwischen der Kernschicht 100 und den äußeren Schichten 101,102 weiter erhöht werden. Durch eine Verstreckung erhöht sich in der Kernschicht 100 durch spannungsinduzierte Kristallisation der kristalline Anteil, außerdem entsteht eine bessere Molekülkettenanordnung. Die amorphen Polymere der äußeren Schichten 101,102 bleiben dagegen auch bei einer Verstreckung amorph.

Bevorzugt wird die Trägerschicht 1 selbst durch einen Coextrusionsprozeß hergestellt, in dem entsprechend der Schichtstruktur unterschiedliche Schmelzen zusammengeführt werden. An den Coextrusionsprozeß kann sich optional ein Verstreckungsprozeß anschließen, um vorgegebene Anforderungen zu erreichen oder zu verstärken.

Die zweite Schicht 2 bedeckt sowohl die Bauelemente 7, 7' als auch die Innenoberfläche 5 der Trägerfolie 1. Sie wird durch Extrusionsbeschichtung in der Schmelze aufgetragen. Dabei werden typischerweise mehrere Schichten aus thermoplastischen Polymeren coextrudiert, so daß, wie durch die gestrichelte Linie 6' in Fig. 2 angedeutet, eine aus mehreren Teilschichten 2, 2' aufgebaute schmelzextrudierte Schicht 2 entsteht. Die Teilschichten 2' und 2" können dabei aus unterschiedlichen thermoplastischen Polymeren coextrudiert werden. Dadurch ist es möglich, Anforderungen an die Schicht 2, z.B. hinsichtlich Elastizität oder Reißfestigkeit gezielt einzustellen. Das Polymer für die äußere Teilschicht 2" wird zweckmäßig so gewählt, daß diese eine sehr ebene Oberfläche 6 aufweist. Ohne weiteres kann die Schicht 2 z.B. aus sieben coextrudierten Teilschichten bestehen. Alle Schichten, 1, 2' und 2" zusammen formen eine einheitliche folienartige Schichtstruktur mit einer über die gesamte Fläche gleichen Dicke. Die elektronischen Bauteile 7, 7' sind dabei durch die Einbettung optimal geschützt.

Wie aus Fig. 2a ersichtlich ist, egalisiert die aufgebrachte Schmelze die Unebenheiten zwischen den Bauteilen 7 und der Innenoberfläche 5 der Trägerfolie 1 und füllt die verbleibenden Lücken in der Aussparung 3. Die schmelzextrudierte Schicht 2 weist eine Oberfläche 6 auf, die im Wesentlichen eben ist, d.h. die Oberfläche 6 folgt nicht den durch die Bauteile 7, 7' vorgegebenen Konturen.

Durch die Einbringung einer coextrudierten Trägerschicht 1 unmittelbar in den Coextrusionsprozeßbietet sich die Möglichkeit, ein Folienverbundmaterial mit Außenschichten 1 und 2" herzustellen, die in dieser Kombination an sich nicht miteinander verträglich sind. Durch Vermittlung der Verbindungsschicht 101 können sie jedoch miteinander verbunden werden.

Fig. 3 zeigt eine Aufsicht auf ein erfindungsgemäßes Datenträgerelement, wobei die Möglichkeiten der Antennengestaltung veranschaulicht werden. Das Datenträgerelement 30 besteht aus einer Trägerfolie, auf die eine UHF-Antenne 8" in Form einer Leiterbahn aufgedruckt ist, einem Flip-Chip 8', der auf die Antennenanschlüsse geklebt ist, und einer durch Extrusionsbeschichtung aufgetragenen Abdeckung, in die der Chip 8' eingebettet ist. Die Abmessungen von Trägerfolie und Extrusionsbeschichtung sind in Fig. 3 durch die Umrisslinie des Datenträgerelements 30 angegeben.

Das Datenträgerelement 30 kann nun in den Schichtaufbau einer Chip-Karte integriert werden. Bevorzugt hat die Chip-Karte dieselben Abmessungen wie das Datenträgerelement 30, so dass das Datenträgerelement 30 eine vollflächige Schicht innerhalb des Schichtaufbaus der Karte bildet. Eine beispielhafte Chip-Karte könnte folgenden Aufbau haben: Datenträgerelement 30 (Dicke bis zu 300 µm) zwischen opaken Folien aus PEC, d.h. einer Mischung aus PC und PETG, (Dicke jeweils 160 µm), sowie als Außenschichten Folien aus transparentem PEC (Dicke jeweils 105 µm). Die Folien aus PEC sind bevorzugt laserbar.

Die Figuren 4 bis 7 zeigen die Herstellung des erfindungsgemäßen Folienverbundmaterials.

Fig. 4a zeigt eine Extruder-Walzenanlage mit einem Drei-Zonen-Doppelschneckenextruder 24 mit den Schnecken 24' und 24" und einem Drei-Zonen-Einschneckenextruder 25, einem Feedblock 26 und einer Düse 27, mit den Kühlwalzen 23, 23', 23" und den Folienrollen 21 und 22. In den Extrudern 24 und 25 wird jeweils ein Polymergranulat geschmolzen und dem Feedblock 26 zugeführt, wie durch die Pfeile angedeutet. Im Feedblock werden die Schmelzeströme verteilt und der Mehrkanaldüse 27 zugeführt. Bei der Mehrkanaldüse handelt es sich um eine Breitschlitzdüse mit Kleiderbügelverteiler.

Auf der Folienrolle 21 ist das zu beschichtende Ausgangsmaterial, d.h. die mit elektronischen Bauteilen bestückte Trägerfolie 1, aufgewickelt. Sie wird in Pfeilrichtung zur Kühlwalze 23 und weiter in den Walzenspalt zwischen den Kühlwalzen 23 und 23' transportiert. Im Spalt zwischen den beiden Kühlwalzen 23 und 23' wird die Polymerschmelze aus der Düse 27 auf das mit den elektronischen Bauelementen bestückte Ausgangsmaterial 1 aufgetragen. Im dargestellten Fall handelt es sich um eine Beschichtung durch Coextrusion zweier verschiedener Thermoplaste, wobei die elektronischen Bauteile in eine Schmelzextrusions-Doppelschicht eingebettet werden. Alle Kühlwalzen 23, 23', 23" sind temperaturgeregelt. Die Temperatureinstellungen werden dabei an die jeweils verarbeiteten Materialien angepaßt. Das beschichtete Trägermaterial wird in Pfeilrichtung weitertransportiert durch den Walzenspalt zwischen den Kühlwalzen 23' und 23", und beim weiteren Durchlauf wird die durch Schmelzextrusion aufgetragene Beschichtung 2 mit den Teilschichten 2', 2" geglättet, gekühlt, gehärtet und mit der Trägerfolie 1 verbunden. Schließlich wird das Folienverbundmaterial 10 auf der Folienrolle 22 aufgewickelt.

Fig. 4b zeigt eine Ausführungsvariante zu der Anlage nach Fig. 4a, in der über eine Abwickelvorrichtung 123ein zweites Ausgangsmaterial in Form einer zweiten Trägerschicht 1' unmittelbar in den Coextrusionsprozeß zugeführt wird. Das zweite Ausgangsmaterial 1' bzw. die Trägerfolie ist zweckmäßig wie das erste aufgebaut und besitzt eine entsprechende Schichtstruktur. Die zweite Trägerschicht 1' wird von der der ersten Trägerschicht 1 gegenüberliegende Seite der Schmelzeschicht 2 zugeführt, so daß sie die Oberfläche 6 der Schmelzeschicht 2 bedeckt und ein Folienverbundmaterial 10 mit eine Sandwichstruktur entsteht, in der die aus der Schmelzeschicht entstehende Schicht 2 von zwei Trägerschichten 1, 1' eingefaßt ist. Es ist dabei ohne weiteres möglich, die Bauteile 7, 7' teilweise auf der ersten Trägerschicht 1 und teilweise auf der zweiten Trägerschicht 1' zu plazieren.

Nachfolgend sind zur Orientierung einige beispielhafte Prozessbedingungen angegeben.

**Schneckenzonenlängen am Einschneckenextruder und Extrusionstemperaturen am Ein- und Doppelschneckenextruder (Richtwerte)**

| | Austragungszone | Kompressionszone | Einzugszone |
|---|---|---|---|
| allgemein | 0,3L - 0,6L | 0,06L - 0,4L | 0,15L - 0,5L |
| bevorzugt | 0,35L - 0,55L | 0,1L - 0,3L | 0,25L - 0,45L |
| besonders bevorzugt | 0,4L - 0,5L | 0,15L - 0,25L | 0,4L - 0,5L |

### Extrusionstemperaturen:

| Einzugszone (material-/rohstoffabhängig) | |
|---|---|
| allgemein: | 20°C-180°C |
| bevorzugt: | 30°C-100°C |
| besonders bevorzugt: | 45°C-70°C |

| Kompressions- und Austragungszone (material-/rohstoffabhängig) | |
|---|---|
| allgemein: | 160°C-320°C |
| bevorzugt: | 180°C-280°C |
| besonders bevorzugt: | 220°C-260°C |

### Walzentemperaturen und Friktionen

Die Regelung der Friktion ist abhängig von den verarbeiteten Materialien und deren Verarbeitungstemperaturen. In nachstehender Tabelle sind Richtwerte aufgeführt:

| Walzentemperaturen und Friktionen | | | | |
|---|---|---|---|---|
| Walze | | Walze 23 | Walze 23' | Walze 23" |
| Temperatur [°C] | allgemein | 15-50 | 15-120 | 15-170 |
| | bevorzugt | 20-45 | 30-100 | 30-120 |
| | besonders bevorzugt | 25-40 | 35-80 | 35-70 |
| Friktion [%] (bezogen auf die Masterwalze 23') | allgemein | -10-+10 | 0 | -5-+10 |
| | bevorzugt | -5-+5 | 0 | -1-+8 |
| | besonders bevorzugt | -1-+1 | 0 | 0-+4 |

Es versteht sich, dass auch mehrere Kühlwalzen vorgesehen werden können, gegebenenfalls auch nicht alle der Walzen 23, 23' und 23" als Kühlwalzen ausgebildet sein müssen, und weitere Einrichtungen wie beispielsweise Führungsrollen oder Spannrollen vorgesehen werden können.

In Fig. 5 ist das erfindungsgemäße Folienverbundmaterial in Form eines Endlosbands 20 in Aufsicht gezeigt. Genauer gesagt ist das Verbundmaterial während des Herstellungsprozesses gezeigt, wobei die Linie 28 den Beginn des Schmelzezulaufs angibt. Rechts der Linie 28 erkennt man die Trägerfolie 1 mit darauf aufgeklebten elektronischen Bauteilgruppen 8. Die Antennen sind auf die Trägerfolie aufgedruckt. Links der Linie 28 ist die Trägerfolie 1 mit den darauf aufgeklebten elektronischen Bauteilgruppen 8 bereits von der Extrusionsschicht 2 bedeckt. In diesem Fall erkennt man die Bauteilgruppen 8 bei Aufsicht auf das Bandmaterial 20 nicht mehr. In Fig. 5 sind sie zur Veranschaulichung gestrichelt angedeutet.

Fig. 6 zeigt ein erfindungsgemäßes Folienverbundmaterial wie in Fig. 5, jedoch nicht in Aufsicht, sondern im Schnitt. Wie aus Fig. 6 unmittelbar erkennbar wird, hat das Endlosband 20 nach der Extrusionsbeschichtung mit der Schicht 2 trotz der durch die elektronischen Bauteilgruppen 8 verursachten Unebenheiten an beiden Seiten im Wesentlichen ebene Oberflächen.

Fig. 7 zeigt ebenfalls einen Schnitt durch ein erfindungsgemäßes Folienverbundmaterial in Form eines Endlosbands, analog der Darstellung in Fig. 6. Das Endlosband 20' der Fig. 7 weist jedoch eine Coextrusionsbeschichtung, bestehend aus verschiedenen thermoplastischen Polymeren, die Teilschichten 2', 2" bilden, auf. Die außen liegende Teilschicht 2" der Coextrusionsbeschichtung weist eine im Wesentlichen ebene Oberfläche auf.

In den Figuren 6 und 7 sind die Bauteilgruppen 8 im Wesentlichen identisch dargestellt. Es versteht sich, dass sie auch unterschiedliche Abmessungen haben können.

Das erfindungsgemäße Folienverbundmaterial in Form der Endlosbänder 20, 20' kann nun gewünschtenfalls an einer seiner Oberflächen oder an beiden Oberflächen mit weiteren Beschichtungen ausgestattet werden, beispielsweise erneut durch Schmelzextrusion, durch Heißschmelzbeschichtung oder durch Auflaminieren oder Aufkaschieren von Folien. Alternativ kann es auch ohne weitere Beschichtungen verwendet werden, was insbesondere dann vorteilhaft ist, wenn es nicht auf eine Oberfläche aufgebracht, sondern in den Schichtaufbau eines Produkts integriert werden soll. Dazu werden von dem Endlosband 20, 20' Einzelelemente, d.h. Datenträgerelemente, der gewünschten Größe abgetrennt.

## Patentansprüche

1. Verfahren zur Herstellung eines Verbundmaterials (10) mit mindestens einer ersten Trägerschicht (1) mit einer Innenoberfläche (5) und einer Außenoberfläche (5'),
mindestens einem elektronischen Bauteil (7, 7') oder mindestens einer elektronischen Bauteilgruppe (8) auf der Innenoberfläche (5) der Trägerschicht (1), und
einer zweiten Schicht (2) aus einem Schmelzematerial, die die Innenoberfläche (5) der Trägerschicht (1) und das mindestens eine elektronische Bauteil (7, 7') oder die mindestens eine elektronische Bauteilgruppe (8) bedeckt,
umfassend die folgende Schritte:
- Bereitstellen eines Ausgangsmaterials zur Bildung der ersten Trägerschicht (1), das an einer Innenoberfläche (5) gute Verbindungseigenschaften zu einem Schmelzematerial (2) aufweist, und dessen Außenoberfläche (5') gut laminierbar ist,
- Plazieren des mindestens einen elektronischen Bauteils (7, 7') oder der mindestens einen elektronischen Bauteilgruppe (8) auf der Innenoberfläche (5) der Trägerschicht (1),
- Extrusionsbeschichten des Ausgangsmaterials an der Innenoberfläche (5) mit dem mindestens einem Schmelzematerial unter Bildung der zweiten Schicht (2), wobei das mindestens eine elektronische Bauteil (7, 7') oder die elektronische Bauteilgruppe (8) in die zweite Schicht (2) eingebettet wird und das Schmelzematerial (2) eine innige Verbindung mit der ersten Trägerschicht (1) eingeht, und
- Führen der mit Schmelzematerial belegten ersten Trägerschicht (1) durch eine Walzenanlage mit wenigstens einer Kühlwalze (23, 23', 23"), in der die zweite Schicht (2) gekühlt, geglättet und gehärtet wird und das Verbundmaterial (10) entsteht, wobei an der zweiten Schicht (2) eine ebene Oberfläche (6) erzeugt wird.

2. Verfahren nach Anspruch 1, **dadurch gekennzeichnet, dass** der Schritt des Extrusionsbeschichtens ein Coextrusionsbeschichten mit mindestens zwei weiteren Materialien ist, wobei die zweite Schicht (2) als Coextrusionsschicht mit mindestens zwei Teilschichten (2', 2") ausgebildet wird, und mindestens an der äußersten Teilschicht (2") eine ebene Oberfläche (6) erzeugt wird.

3. Verfahren nach einem der Ansprüche 1 oder 2, **dadurch gekennzeichnet, dass** auf das Verbundmaterial (10) an der Außenoberfläche (5') der ersten Trägerschicht (1) und/oder an der Oberfläche (6) der zweiten Schicht (2) mindestens eine dritte Schicht (105) aufgeklebt, aufextrudiert oder auflaminiert wird.

4. Verfahren nach Anspruch 1, **dadurch gekennzeichnet, dass** zur Bildung einer zweiten Trägerschicht (1') ein weiteres Ausgangsmaterial, das an einer Innenoberfläche gute Verbindungseigenschaften zu einem Schmelzematerial (2) aufweist, bereitgestellt und beim Schritt des Extrusionsbeschichtens so zugeführt wird, daß das Schmelzematerial (2) eine innige Verbindung mit dem weiteren Ausgangsmaterial (1') eingeht.

5. Verfahren nach einem der vorhergehenden Ansprüche, **dadurch gekennzeichnet, dass** die Außenoberfläche (5') der ersten Trägerschicht (1), und/oder der zweiten Trägerschicht (1') so ausgeführt wird, daß sie gut laminierbar ist.

6. Verfahren nach einem der Ansprüche 1 bis 5, **dadurch gekennzeichnet, dass** das Verbundmaterial (10) als Folienbahn hergestellt wird und dass aus der Folienbahn Einzelelemente mit jeweils mindestens einem elektronischen Bauteil (7, 7') oder einer elektronischen Bauteilgruppe (8) abgetrennt werden.

7. Verbundmaterial (10) mit mindestens
- einer Trägerschicht (1) aus einem ersten Material mit einer Innenoberfläche (5) und einer Außenoberfläche (5'),
- mindestens einem elektronischen Bauteil (7, 7') oder mindestens einer elektronischen Bauteilgruppe (8) auf der Innenoberfläche (5) der Trägerschicht (1), und
- einer zweiten Schicht (2) aus mindestens einem Schmelzematerial, die die erste Oberfläche (5) der Trägerschicht (1) und das mindestens eine elektronische Bauteil (7, 7') oder die mindestens eine elektronische Bauteilgruppe (8) bedeckt, und die an ihrer von der Trägerschicht (1) abgewandten Seite eine ebene Oberfläche (6) aufweist,
**dadurch gekennzeichnet, dass**
das Verbundmaterial (10) gemäß einem Verfahren nach einem der vorstehenden Ansprüche hergestellt worden ist und die Trägerschicht (1) eine Schichtstruktur mit einer Kernschicht (100) und einer Verbindungsschicht (101) aufweist, wobei die Kernschicht (100) der Trägerschicht (1) Zugfestigkeit verleiht und die Verbindungsschicht (101) eine innige Verbindung zu dem Schmelzematerial der zweiten Schicht (2) aufweist.

8. Verbundmaterial (10) nach Anspruch 7, **dadurch gekennzeichnet, dass** die zweite Schicht (2) eine Coextrusionsschicht mit mindestens zwei Teilschichten (2', 2") ist, wobei mindestens die von der Trägerschicht (1) am weitesten entfernt angeordnete Teilschicht (2") eine ebene Oberfläche (6) aufweist.

9. Verbundmaterial (10) nach Anspruch 7 oder 8, **dadurch gekennzeichnet, dass** die Trägerschicht (1) mindestens eine Aussparung (3) aufweist, in der ein elektronisches Bauteil (7') angeordnet ist.

10. Verbundmaterial (10) nach einem der Ansprüche 7 bis 9, **dadurch gekennzeichnet, dass** es mindestens eine weitere Trägerschicht (1') aufweist, die eine Schichtstruktur mit einer Kernschicht und einer Verbindungsschicht aufweist, wobei die Kernschicht der weiteren Trägerschicht (1') Zugfestigkeit verleiht und die Verbindungsschicht eine innige Verbindung zu dem Schmelzematerial der zweiten Schicht (2) aufweist.

11. Verbundmaterial (10) nach Anspruch 10, **dadurch gekennzeichnet, dass** die weitere Trägerschicht (1') mindestens ein elektronisches Bauteil (7, 7') oder mindestens eine elektronische Bauteilgruppe (8) trägt.

12. Verbundmaterial (10) nach einem der Ansprüche 7 bis 11, **dadurch gekennzeichnet, dass** das mindestens eine elektronische Bauteil (7, 7') oder die mindestens eine elektronische Bauteilgruppe (8) ein IC-Modul mit IC-Chip (8') und Antenne (8") ist.

13. Verbundmaterial (10) nach einem der Ansprüche 7 bis 12, **dadurch gekennzeichnet, dass** es in Form eines Endlosbands vorliegt.

14. Verbundmaterial (10) nach einem der Ansprüche 7 bis 13, **dadurch gekennzeichnet, dass** es in Form eines Datenträgerelements (30) vorliegt.

15. Produkt wie Chip-Karte, Etikett oder Wertgegenstand, **dadurch gekennzeichnet, dass** es mit einem Datenträgerelement (30) nach Anspruch 14 ausgestattet ist, das an seiner Oberfläche befestigt ist oder in das Volumen des Produkts eingebettet ist.

## Claims

1. A method for producing a composite material (10) having at least
a first carrier layer (1) with an inside surface (5) and an outside surface (5'),
at least one electronic component (7, 7') or at least one electronic component group (8) on the inside surface (5) of the carrier layer (1), and
a second layer (2) of a molten material, which covers the inside surface (5) of the carrier layer (1) and the at least one electronic component (7, 7') or the at least one electronic component group (8),
comprising the following steps:
- making available a starting material for forming the first carrier layer (1), which has good connecting properties with a molten material (2) on an inside surface (5), and whose outside surface (5') is readily laminatable,
- placing the at least one electronic component (7, 7') or the at least one electronic component group (8) on the inside surface (5) of the carrier layer (1),
- extrusion coating the starting material on the inside surface (5) with the at least one molten material so as to form the second layer (2), whereby the at least one electronic component (7, 7') or the electronic component group (8) is embedded in the second layer (2) and the molten material (2) enters into an intimate connection with the first carrier layer (1), and
- guiding the first carrier layer (1) covered with molten material through a roller apparatus having at least one cooling roller (23, 23', 23") in which the second layer (2) is cooled, smoothed and hardened and the composite material (10) arises, whereby a plane surface (6) is produced on the second layer (2).

2. The method according to claim 1, **characterized in that** the extrusion coating step is a coextrusion coating with at least two further materials, whereby the second layer (2) is configured as a coextrusion layer with at least two partial layers (2', 2"), and a plane surface (6) is produced at least on the outermost partial layer (2").

3. The method according to either of claims 1 to 2, **characterized in that** at least a third layer (105) is bonded, extruded or laminated onto the composite material (10) on the outside surface (5') of the first carrier layer (1) and/or on the surface (6) of the second layer (2).

4. The method according to claim 1, **characterized in that** for forming a second carrier layer (1') a further starting material which has good connecting properties with a molten material (2) on an inside surface is made available and, in the extrusion coating step, so supplied that the molten material (2) enters into an intimate connection with the further starting material (1').

5. The method according to any of the preceding claims, **characterized in that** the outside surface (5') of the first carrier layer (1), and/or of the second carrier layer (1') is so designed that it is readily laminatable.

6. The method according to any of claims 1 to 5, **characterized in that** the composite material (10) is produced as a foil sheet, and that single elements each with at least one electronic component (7, 7') or one electronic component group (8) are detached from the foil sheet.

7. A composite material (10) having at least
- a carrier layer (1) of a first material with an inside surface (5) and an outside surface (5'),
- at least one electronic component (7, 7') or at least one electronic component group (8) on the inside surface (5) of the carrier layer (1), and
- a second layer (2) of at least one molten material which covers the first surface (5) of the carrier layer (1) and the at least one electronic component (7, 7') or the at least one electronic component group (8), and which has a plane surface (6) on its side facing away from the carrier layer (1),
**characterized in that**
the composite material (10) has been produced by a method according to any of the above claims, and the carrier layer (1) has a layer structure with a core layer (100) and a connection layer (101), whereby the core layer (100) gives the carrier layer (1) tensile strength, and the connection layer (101) has an intimate connection with the molten material of the second layer (2).

8. The composite material (10) according to claim 7, **characterized in that** the second layer (2) is a coextrusion layer with at least two partial layers (2', 2"), whereby at least the partial layer (2") arranged furthest away from the carrier layer (1) has a plane surface (6).

9. The composite material (10) according to claim 7 or 8, **characterized in that** the carrier layer (1) has at least one recess (3) in which an electronic component (7') is arranged.

10. The composite material (10) according to any of claims 7 to 9, **characterized in that** it has at least one further carrier layer (1') which has a layer structure with a core layer and a connection layer, whereby the core layer gives the further carrier layer (1') tensile strength, and the connection layer has an intimate connection with the molten material of the second layer (2).

11. The composite material (10) according to claim 10, **characterized in that** the further carrier layer (1') carries at least one electronic component (7, 7') or at least one electronic component group (8).

12. The composite material (10) according to any of claims 7 to 11, **characterized in that** the at least one electronic component (7, 7') or the at least one electronic component group (8) is an IC module with an IC chip (8') and an antenna (8").

13. The composite material (10) according to any of claims 7 to 12, **characterized in that** it is present in the form of an endless band.

14. The composite material (10) according to any of claims 7 to 13, **characterized in that** it is present in the form of a data carrier element (30).

15. A product such as a chip card, label or object of value, **characterized in that** it is equipped with a data carrier element (30) according to claim 14 which is fastened to its surface or is embedded in the volume of the product.

## Revendications

1. Procédé de fabrication d'un matériau composite (10) avec au moins
une première couche support (1) comportant une surface intérieure (5) et une surface extérieure (5'),
au moins un composant électronique (7, 7') ou au moins un groupe de composants électroniques (8) sur la surface intérieure (5) de la couche support (1), et
une deuxième couche (2) en un matériau fondu, laquelle recouvre la surface intérieure (5) de la couche support (1) et le au moins un composant électronique (7, 7') ou le au moins un groupe de composants électroniques (8),
comprenant les étapes suivantes :
- mise à disposition d'un matériau de départ pour la constitution de la première couche support (1), lequel présente à une surface intérieure (5) de bonnes propriétés de liaison avec un matériau fondu (2), et dont la surface extérieure (5') est bien laminable,
- placement du au moins un composant électronique (7, 7') ou du au moins un groupe de composants électroniques (8) sur la surface intérieure (5) de la couche support (1),
- revêtement du matériau de départ par extrusion à la surface intérieure (5) avec au moins un matériau fondu sous constitution de la deuxième couche (2), le au moins un composant électronique (7, 7') ou le groupe de composants électroniques (8) étant noyé dans la deuxième couche (2) et le matériau fondu (2) entrant en liaison intime avec la première couche support (1), et
acheminement de la première couche support (1) couverte de matériau fondu à travers une installation de rouleaux comportant au moins un rouleau de refroidissement (23, 23', 23") dans laquelle la deuxième couche (2) est refroidie, lissée et trempée et le matériau composite (10) se forme, une surface plane (6) étant générée à la deuxième couche (2).

2. Procédé selon la revendication 1, **caractérisé en ce que** l'étape du revêtement par extrusion est un revêtement par coextrusion avec au moins deux autres matériaux, la deuxième couche (2) étant réalisée en tant que couche de coextrusion comportant au moins deux couches partielles (2, 2'), et une surface plane (6) étant générée au moins à la couche partielle (2") la plus extérieure.

3. Procédé selon une des revendications 1 ou 2, **caractérisé en ce qu'**au moins une troisième couche (105) est collée, extrudée ou laminée sur le matériau composite (10) à la surface extérieure (5') de la première couche support (1) et/ou à la surface (6) de la deuxième couche (2).

4. Procédé selon la revendication 1, **caractérisé en ce que**, pour la constitution d'une deuxième couche support (1'), un matériau supplémentaire de départ qui présente à une surface intérieure de bonnes propriétés de liaison avec un matériau fondu (2) est mis à disposition et est acheminé de telle manière lors de l'étape du revêtement par extrusion que le matériau fondu (2) entre en liaison intime avec le matériau supplémentaire de départ (1').

5. Procédé selon une des revendications précédentes, **caractérisé en ce que** la surface extérieure (5') de la première couche support (1) et/ou de la deuxième couche support (1') est réalisée de telle manière qu'elle est bien laminable.

6. Procédé selon une des revendications 1 ou 5, **caractérisé en ce que** le matériau composite (10) est fabriqué sous forme de ruban de film et que des éléments distincts comportant chacun au moins un composant électronique (7, 7') ou un groupe de composants électroniques (8) sont découpés dans le ruban de film.

7. Matériau composite (10) avec au moins
- une couche support (1) en un premier matériau comportant une surface intérieure (5) et une surface extérieure (5'),
- au moins un composant électronique (7, 7') ou au moins un groupe de composants électroniques (8) sur la surface intérieure (5) de la couche support (1), et
- une deuxième couche (2) en au moins un matériau fondu, laquelle recouvre la première surface (5) de la couche support (1) et le au moins un composant électronique (7, 7') ou le au moins un groupe de composants électroniques (8), et qui présente à son côté opposé à la couche support (1) une surface plane (6),
**caractérisé en ce que**
le matériau composite (10) a été fabriqué conformément à un procédé selon une des revendications précédentes et la couche support (1) présente une structure en couches comportant une couche noyau (100) et une couche de liaison (101), la couche noyau (100) de la couche support (1) conférant résistance à la traction et la couche de liaison (101) présentant une liaison intime avec le matériau fondu de la deuxième couche (2).

8. Matériau composite (10) selon la revendication 7, **caractérisé en ce que** la deuxième couche (2) est une couche de coextrusion comportant au moins deux couches partielles (2, 2'), au moins la couche partielle (2") agencée de manière la plus éloignée de la couche support (1) présentant une surface plane (6).

9. Matériau composite (10) selon la revendication 7 ou 8, **caractérisé en ce que** la couche support (1) présente au moins un évidement (3) dans lequel est agencé un composant électronique (7').

10. Matériau composite (10) selon une des revendications de 7 à 9, **caractérisé en ce qu'**il présente au moins une couche support (1') supplémentaire qui présente une structure en couches comportant une couche noyau et une couche de liaison, la couche noyau de la couche support (1') supplémentaire conférant résistance à la traction et la couche de liaison présentant une liaison intime avec le matériau fondu de la deuxième couche (2).

11. Matériau composite (10) selon la revendication 10, **caractérisé en ce que** la couche support (1') supplémentaire porte au moins un composant électronique (7, 7') ou au moins un groupe de composants électroniques (8).

12. Matériau composite (10) selon une des revendications de 7 à 11, **caractérisé en ce qu'**au moins un composant électronique (7, 7') ou le au moins un groupe de composants électroniques (8) est un module IC à puce IC (8') et antenne (8").

13. Matériau composite (10) selon une des revendications de 7 à 12, **caractérisé en ce qu'**il se trouve sous forme d'un ruban sans fin.

14. Matériau composite (10) selon une des revendications de 7 à 13, **caractérisé en ce qu'**il se trouve sous forme d'un élément de support de données (30).

15. Produit tel que carte à puce, étiquette ou objet de valeur, **caractérisé en ce qu'**il est équipé d'un élément de support de données (30) selon la revendication 14, qu'il est fixé à sa surface ou est noyé dans le volume du produit.
